Europäisches Patentamt

(19) European Patent Office

Office européen des brevets

(11) Publication number: **0 016 656**
**A1**

(12) # EUROPEAN PATENT APPLICATION

(21) Application number: **80300907.5**

(22) Date of filing: **24.03.80**

(51) Int. Cl.³: **G 01 M 3/04**
**G 01 M 17/00**

(30) Priority: **24.03.79 GB 7910429**

(43) Date of publication of application:
**01.10.80 Bulletin 80/20**

(84) Designated Contracting States:
**BE DE FR GB IT SE**

(71) Applicant: **BL CARS LIMITED**
**35-38 Portman Square**
**London W1H 0HQ(GB)**

(72) Inventor: **Marshall, Peter Edward George**
**37, Saxon Close**
**Startford-upon-Avon Warwickshire(GB)**

(74) Representative: **Hunt, Anthony Edward**
**BL Limited Patent Department Cowley Body Plant**
**Cowley Oxford OX4 5NL(GB)**

(54) **Testing vehicle seals.**

(57) The seals of the windows, doors and boot of a vehicle (11) are checked by creating a temperature difference, and preferably a pressure difference also, between the interior and the exterior of the vehicle and observing the location of any leaks in the seals by monitoring the infra-red radiation from areas around the seals so as to detect temperature variations caused by air escaping through the leaks.

EP 0 016 656 A1

./...

FIG.1.

OVERHEAD SCREEN
INSPECTION CAMERA'S

14
15
11
13

CONVEYOR

12

SIDE MOUNTED
DOOR SEAL
INSPECTION CAMERA'S
16

OPERATOR
TELEVISION
MONITOR

18

19 — MINI-COMPUTER
MONITOR WITH
AUTOMATIC
QUALITY AUDIT

COLD AIR
SUPPLY
13

12

11

17

## TESTING VEHICLE SEALS

This invention relates to the testing of vehicle seals. Such seals, if faulty, can for example lead to leakage of water into the interior of the vehicle, or to so-called "wind-noise" as the vehicle moves at speed.

Hitherto in the mass production of motor vehicles, it has generally only been possible to test the seals of a percenta of vehicles produced owing to the costly and time consuming techniques employed. A typical method has been to test say 10 per cent of finished vehicles by subjecting them to a water spray around the exterior of the vehicle. The interior of the vehicle is then inspected by an operator whose assessment of the existence and location of leaks is necessarily subjective. It is possible, where leaks exist, that the interio of the tested vehicle will become soiled, and moreover the system only enables a check to be made on production standards it does not practicably allow the standard of sealing of each vehicle to be checked.

The invention provides a method of testing vehicle seals, including the steps of establishing a temperature difference between the air on respective sides of a seal, and detecting leaks by monitoring the infra-red radiation from surfaces at and adjacent the seal.

Preferably the method includes the step of establishing a pressure difference across the seal.

The invention extends to apparatus for performing the above method.

The invention will now be described, by way of example; with reference to the accompanying drawings, in which:-

001665

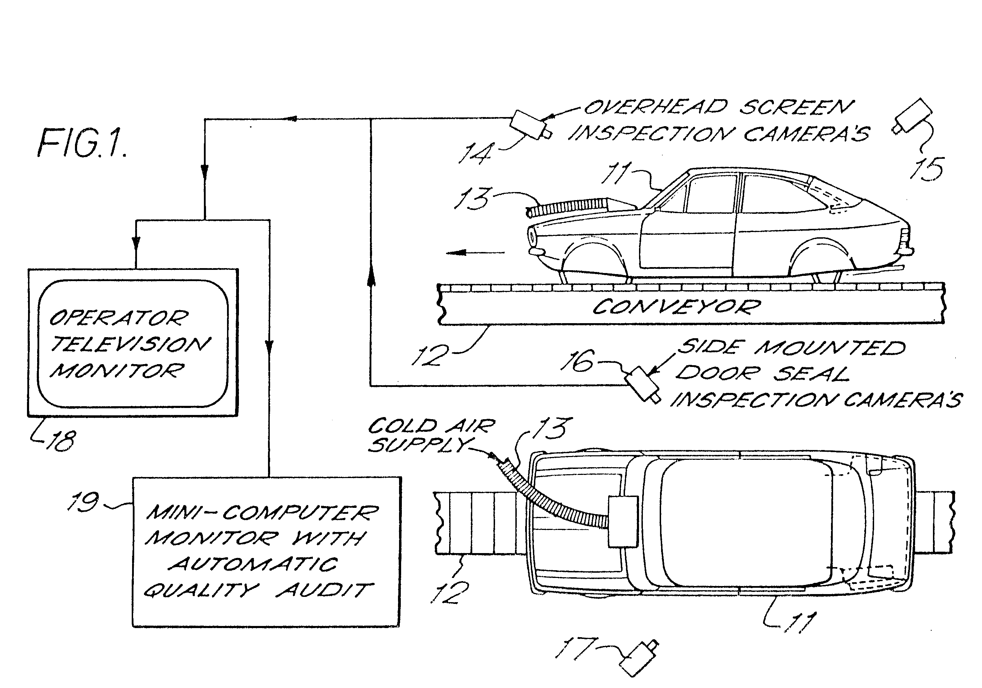

Figure 1 shows a motor vehicle in side and plan views in conjunction with a diagrammatic representation of apparatus for monitoring the infra-red radiation from surfaces on the motor vehicle; and

Figure 2 is a front view of another motor vehicle showing typical camera positions which enable the top, sides and under side of the vehicle to be scanned.

Firgure 1 shows a motor vehicle 11, in the upper part of the figure in side view and in the lower part of the figure in plan view. The vehicle 11 is in the minimum state of build compatible with testing of its seals, that is to say it is full glazed with doors, door seals, boot, boot seals and floor in place. This reduces the amount of dismantling and reassembly required to rectify any leaks discovered as compared to that required in a finished vehicle, although the testing system could of course be used on finished vehicles.

Vehicle 11 is mounted on an assembly conveyor 12 at the point where it passed through a seal testing station, which is confined to approximately one vehicle - length thus saving space as compared to conventional testing stations. The station whilst open at its ends, is located in an enclosure of a material and finish such as effects minimum interference by ambient emissions with the resolution of the infra-red detecting system hereinafter described. Prior to its arrival at the testing stations, the vehicle has its interior filled with air 10°C lower than the ambient temperature at the testing station from a cold air supply pipe 13 which connects with the vehicle's plenum chamber intake as shown. Thus a temperature difference is established across the door, boot and window seals. In some instances a thermal gradient may exist in the air in the interior of the vehicle, however such gradients can be accounted for by compensation of the infra-red detecting apparatus.

The infra-red detecting system includes a pair of overhead inspection cameras 14 and 15 for scanning the front screen and the rear screen and boot, respectively, and a pair of cameras 16 and 17 for scanning the door and side window seals. Each camera automatically scans its respective field of view in a predetermined pattern as the vehicle passes a predetermined location, focusses the infra-red radiation on a sensitive detector and produces an electrical signal related to the intensity of the radiation detected. After amplification the signal is used to control the electron beam of a visual display unit comprising TV-type picture tube 18. The beam sweeps over the picture screen in synchronism with the camera scan, forming a thermal image of the object scanned. Thus a picture is displayed showing the surface temperatures of the body shell, windows, seals etc.

The output from the cameras can also be filtered so that only surfaces having a temperature difference from ambient of greater than a threshold value of, for example, $5^{\circ}C$ are noted as having a temperature different from ambient. Such a filtered output is used to mark on a paper printout showing an outline of the vehicle, those surfaces having a temperature substantially different from ambient. The paper printout contains information from each of the cameras and thus acts as a complete record of a particular vehicle.

- 4 -

Output from the cameras is also fed to a mini-computer 19 which stores the information for quality audit purposes, for example to identify where faults are typical of a given vehicle type, indicating that revision of design or manfacturing details is required.

The sequence of operation of the apparatus is as follows. A vehicle in part-built state, as described above, passes along the conveyor 12 upstream of the testing station, and at a predetermined location trips a switch which initiates the test operation sequence. The cold air supply pipe is then automaticall engaged on the vehicle over the plenum chamber intake. Cold air is then pumped into the vehicle at a pressure above ambient to fill the vehicle with cold air and cause the surfaces of the vehicle body and seals at or adjacent any leaks to be cooled by the air escaping from the interior of the vehicle.

As the vehicle passes through the seal testing station, the cameras scan their allotted areas as described above. The thermal image represented by the camera output discloses those areas which have been cooled by the escaping cold air, and thus identifies the areas in which leaks exist. These areas are then recorded both in the mini-computer and on the paper printout which gives a graphical representation of the location of the leaks and is placed in the vehicle. Operation of the cameras is monitored by an operator watching the visual display unit 18. As the vehicle leaves the testing station the test sequence is automatically terminated and the cold air pipe is automatically removed. The vehicle passes along the line to a rectification station where operators cure any leaks after identifying them from the paper printout found in the vehicle.

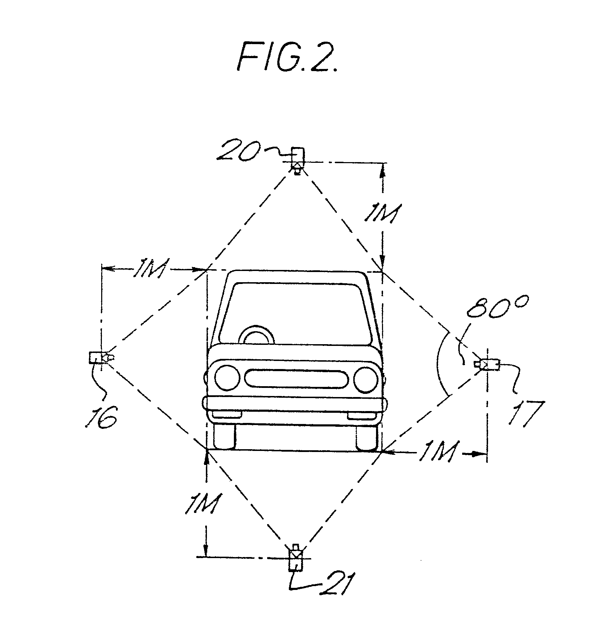

Because in the above example the test operation is completely automated it can be carried out on an overhead conveyor suspended say thirty feet above the ground. As such it requires no production space since production is generally carried on at ground level. With such an overhead facility, the underbody of the vehicle can be included in the inspection. Suitable camera locations are shown in Figure 2. Cameras 20 and 21 scanning the top and underside of the vehicle are arranged to pivot automatically to enable them to scan the entire top or underside, respectively, thus obviating the two cameras 14 and 15 to cover the top of the vehicle, for example.

It will be seen that the described method of testing vehicle seals is extremely simple in operation and provides a ready source of data for quality audit purposes. Because leakage through the seals is by dry air, no water contamination will adversely affect material within the vehicle and there is no need to subsequently dry the vehicle which in prior art arrangements involves equipment for drying as well as space to store vehicles being dried.

The system described can readily be adapted to applications off the production line, for example in developing seals and sealing designs. Of particular benefit in this application is the facility to successively filter the output of the cameras so that an objective appraisal can be made of the leak size. The method and apparatus can be used to detect leaks not only in door, window and boot seals, but also to test the seal effected at welded joints between body panels.

Although the arrangement illustrated is presently preferred it will be appreciated that many variations are possible within the scope of the invention.

00166

For example while colder than ambient air is fed to the interior of the vehicle, it is only necessary that a temperature difference of some sort is created across the seals. This could be achieved by injecting hotter than ambient air into the interior of the vehicle, or by changing the temperature of the air outside the vehicle, or even by directing hot or cold air at a seal from a blower, for example. *Thus in an alternative embodiment air 15°c hotter than ambient is fed into the vehicle.*

Again, while the preferred embodiment refers to the creation of a pressure difference across the seals, that is to say between the interior and exterior of the vehicle, the invention can be used without the establishment of such a pressure difference, the natural air movements being suffici under some circumstances to cause air to pass through leaks and heat or cool the surrounding surfaces.

Although the use of scanning cameras has been specific described, it would for example be possible to use cameras wh would effect a single full plane exposure of the vehicle to provide infra-red photographs of the vehicle, and this could be used instead of the printout for use by rectification operators.

CLAIMS

1. A method of testing vehicle seals, characterised by the steps of establishing a temperature difference between the air on respective sides of a seal, and detecting leaks by monitoring the infra-red radiation from surfaces at and adjacent to the seal.

2. A method as claimed in claim 1, characterised by the step of feeding into the interior of the vehicle, air at a temperature different from the temperature of ambient air surrounding the vehicle.

3. A method as claimed in claim 2, characterised in that said infra-red radiation is monitored at least thirty seconds after said air at a temperature different from ambient has begun to enter said vehicle.

4. A method as claimed in claim 2 or 3, characterised in that said air at a temperature different from ambient is fed into said vehicle through a ventilation aperture in said vehicle.

5. A method as claimed in any preceding claim, characterised in that said temperature difference is at least ten degrees centrigrade.

6. A method as claimed in any preceding claim, characterised by the step of establishing a pressure difference between the air on respective sides of said seal, whereby air flow leak in said seal is encouraged.

7. A method as claimed in claim 6, characterised in that air is pumped into said vehicle to increase the pressure in said vehicle.

8. A method as claimed in any preceding claim, characterised in that said infra-red radiation is monitored by a camera (14) which produces an image showing the temperatures of parts of the vehicle.

9. A method as claimed in claim 8, characterised in that said camera (14) scans the surface of the vehicle and produces an electrical signal representative of the intensity of radiation detected.

10. A method as claimed in claim 8 or 9, characterised in that a plurality of cameras (14,15,16,17,20,21) are employed, each arranged to view a different part of the vehicle.

**FIG.1.**

OVERHEAD SCREEN INSPECTION CAMERA'S

14    15

11

13

OPERATOR TELEVISION MONITOR

18

CONVEYOR

12

SIDE MOUNTED DOOR SEAL INSPECTION CAMERA'S

16

19    MINI-COMPUTER MONITOR WITH AUTOMATIC QUALITY AUDIT

COLD AIR SUPPLY    13

12

11

17

2/2

# FIG.2.

CC16656

European Patent Office

**EUROPEAN SEARCH REPORT**

Application number

EP 80 30 0907

| | DOCUMENTS CONSIDERED TO BE RELEVANT | | CLASSIFICATION OF THE APPLICATION (Int. Cl ³) |
|---|---|---|---|
| Category | Citation of document with indication, where appropriate, of relevant passages | Relevant to claim | |
| | FR - A - 2 294 439 (TECHNIGAZ) <br> * Claims; figure * <br><br> -- <br><br> US - A - 3 791 194 (A.P. PONTELLO) <br> * Abstract; figure 1 * <br><br> -- <br><br> LU - A - 65 328 (S.A. ARBED) <br> * Claim 1 * <br><br> -- | 1,2,6, 8,9 <br><br> 1,2,6, 8,9 <br><br> 1,3,8, 9 | G 01 M 3/04 <br> 17/00 |
| A | FR - A - 2 310 558 (S.A.G.E.M.) <br> * Claim 1; figure 2 * <br><br> ---- | 1 | TECHNICAL FIELDS SEARCHED (Int.Cl.³) <br><br> G 01 M 3/00 <br> 3/02 <br> 3/04 <br> 3/38 <br> 17/00 |
| | | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |
| X | The present search report has been drawn up for all claims | | |
| Place of search <br> The Hague | Date of completion of the search <br> 24-06-1980 | Examiner <br> VAN ASSCHE | |

EPO Form 1503.1 06.78